# FASCICULE DE BREVET EUROPEEN

(11) **EP 0 889 065 B1**
(45) Date de publication et mention de la délivrance du brevet: **22.08.2001**
(21) Numéro de dépôt: 98110432.6
(22) Date de dépôt: 08.06.1998
(51) Int. Cl.: C08F 10/02, C08F 4/642

(54) **Composante catalytique solide pour la polymérisation des oléfines**
Fester Katalysatorbestandteil zur Olefinpolymerisation
Solid catalyst component for the polymerisation of olefins

(30) Priorité: 30.06.1997 FR 9708204
(43) Date de publication de la demande: 07.01.1999
(73) Titulaire: Atofina, 92800 Puteaux (FR)
(72) Inventeur: Spitz, Roger, 69006 Lyon (FR); Saudemont, Thierry, 64270 Salies De Bearn (FR); Malinge, Jean, 64300 Loubieng (FR)

(56) Documents cités:
- PATENT ABSTRACTS OF JAPAN vol. 097, no. 002, 28 février 1997 & JP 08 259617 A (MARUZEN PETROCHEM CO LTD), 8 octobre 1996
- SOGA K: "HIGHLY ISOSPECIFIC, IMMOBILIZED ZIRCONOCENE CATALYSTS SUPPORTED ON CHEMICALLY MODIFIED SIO2" MACROMOLECULAR SYMPOSIA, vol. 89, 1 janvier 1995, pages 249-258, XP000509171
- SOGA K ET AL: "POLYMERIZATION OF PROPENE WITH HIGHLY ISOSPECIFIC SIO2-SUPPORTED ZIRCONOCENE CATALYSTS ACTIVATED WITH COMMON ALKYLALUMINIUMS" MACROMOLECULAR CHEMISTRY AND PHYSICS, vol. 195, no. 10, 1994, pages 3347-3360, XP002017324
- K. SOGA: "Catalyst Design for Tailor-Made Polyolefins", STUDIES IN SURFACE SCIENCE AND CATALYSIS, , 10. Mars 1994, Vol. 89, no. , pages 307 à 314

## Description

L'invention concerne une composante catalytique solide pour la polymérisation ou copolymérisation d'au moins une oléfine.

Les catalyseurs de type métallocène présentent en particulier un intérêt lorsque l'on se propose de préparer des polymères ou copolymères à la polymolécularité réduite, par exemple voisine de 2. Cependant, ces catalyseurs sont généralement adaptés aux procédés de polymérisation homogènes et il n'existe pas de composante catalytique solide de type métallocène adaptée aux procédés de polymérisation hétérogènes, c'est-à-dire aux procédés en suspension ou en phase gazeuse, présentant une forte activité et étant facile à préparer. De plus, les composants catalytiques solide de type métallocène sont réalisées de sorte que l'entité métallocène est en fait adsorbée en surface d'un solide sans liaison forte avec ce dernier. De ce fait, on observe couramment une perte d'activité avec le temps, l'entité métallocène ayant tendance à se libérer de la surface du solide. Ce problème est par exemple plus particulièrement sensible dans le cas des procédés de polymérisation ou copolymérisation en suspension.

La demande de brevet JP-A-08 259 617 décrit un procédé de préparation d'une composante catalytique comprenant une étape de réaction entre un support et SiCl₄ ou CH₃SiCl₃, suivi d'une étape de greffage de groupements indene, suivi d'une étape de réaction avec un dérivé chloré du Néodyme.

Le document de K. Soga "Catalyst Design for Tailor - made Polyolefins", Studies in Surface Science and Catalysis, 1994, 89, 307-314, décrit un procédé de préparation d'une composante catalytique comprenant une étape de réaction entre un support et SiCl₄, suivi d'une étape de greffage de groupements indene, suivi d'une étape de réaction avec un dérivé chloré du zirconium.

La demande de brevet publiée sous le n° J07316219 décrit une composante catalytique comprenant une étape de réaction entre une silice et SiCl₄, et son utilisation en polymérisation du propylène. Une telle composante présente une très faible activité en polymérisation d'une oléfine comme le propylène ou l'éthylène.

L'invention permet de résoudre les problèmes sus-mentionnés.

La composante catalytique solide selon l'invention présente une forte activité en polymérisation ou copolymérisation d'au moins une oléfine telle que l'éthylène ou le propylène. La composante catalytique solide selon l'invention peut mener à des polymères ou copolymères de forte masse moléculaire, par exemple dont la masse moléculaire moyenne en poids est supérieure à 100 000 et dont la polymolécularité est faible, par exemple inférieure à 2,5. La composante catalytique solide selon l'invention présente une activité se maintenant à un haut niveau avec le temps.

L'invention concerne également un procédé de fabrication d'une composante catalytique solide. Le procédé selon l'invention comprend :
- une étape (a) de réaction entre un support et un dérivé halogéné pouvant être représenté par la formule R¹M¹X¹₃ dans laquelle R¹ représente un radical hydrocarboné comme par exemple un radical alkyle, cycloalkyle, aryle, arylalkyle ou alkylaryle, pouvant comprendre de 1 à 20 atomes de carbone, M¹ représente un atome de silicium, germanium ou d'étain, X¹ représente un atome d'halogène, pour obtenir un solide S¹, puis
- une étape (b) de réaction entre le solide S¹ et un composé C capable de greffer au moins un groupement au squelette cycloalcadiényle L à l'atome M¹ appartenant à l'espèce fixée sur le support et issue de R¹M¹X¹₃, pour obtenir un solide S², puis,
- une étape (c) de réaction entre le solide S² et un agent déprotonnant D capable d'arracher un proton du groupement L, pouvant être représenté par la formule R²M²X²ₙ dans laquelle R² représente un atome d'hydrogène ou un groupement hydrocarboné, M² représente un atome de lithium, sodium, potassium ou magnésium, X² représente un atome d'halogène, n représente un nombre égal à 0 si M² est un atome de lithium, sodium ou potassium, ou égal à 1 si M² est un atome de magnésium, pour obtenir un solide S³, puis,
- une étape (d) de réaction entre le solide S³ et un dérivé d'un métal de transition pouvant par exemple être représenté par la formule R³_{y-z}M³X_{z} dans laquelle R³ peut représenter un radical hydrocarboné comme par exemple un radical alkyle comprenant de 1 à 20 atomes de carbone, M³ représente un métal de transition, X représente un halogène, y et z représentent des nombres entiers non nuls tels que y est égal à 3 ou 4 et z va de 1 à y, pour obtenir une composante catalytique solide.

Le support se présente sous forme de particules et peut être tout ensemble de particules, organiques ou inorganiques, habituellement utilisé en support de composante catalytique solide pour la polymérisation des oléfines. Le support peut par exemple être un oxyde minéral poreux tel que la silice, l'alumine, ou un mélange d'au moins deux de ces oxydes. Un support en oxyde minéral poreux comprend de préférence des pores de diamètre allant de 7,5 à 30 nm (75 à 300 Å). De préférence, un support d'oxyde minéral poreux présente une porosité allant de 1 à 4 cm³/g.

De préférence, le support présente une surface allant de 100 à 600 m²/g.

Généralement, le support présente un diamètre moyen de taille de particules allant de 10 à 100 µm.

Le support présente de préférence à sa surface de 0,5 à 10, et de manière encore préférée 1 à 8 groupements hydroxyles, c'est-à-dire radicaux ―OH, par nm².

Le support peut être de nature diverse. Suivant sa nature, son état d'hydratation et son aptitude à retenir l'eau, on peut être amené à lui faire subir des traitements de déshydratation plus ou moins intenses, suivant la teneur en groupements hydroxyles souhaitée en surface.

L'homme du métier peut aboutir par des tests de routine au traitement de déshydratation qu'il convient d'appliquer au support qu'il a choisi, suivant la teneur en groupements hydroxyles souhaitée en surface.

Par exemple, si le support est en silice, la silice peut être chauffée entre 100 et 1 000°C et de préférence entre 140 et 800°C sous balayage d'un gaz inerte comme l'azote ou l'argon, à la pression atmosphérique ou de préférence sous vide, par exemple de pression absolue 1.10⁻² millibars, pendant par exemple au moins 60 min. Pour ce traitement thermique, la silice peut être mélangée par exemple à du NH₄Cl de façon à accélérer la déshydratation.

Si ce traitement thermique est compris entre 100 et 450°C, il est envisageable de le faire suivre d'un traitement de silanisation. Ce genre de traitement aboutit à greffer en surface du support une espèce dérivée du silicium pour rendre plus hydrophobe cette surface. Ce silane peut par exemple être un alkoxytrialkylsilane tel que le méthoxytriméthylsilane, un trialkylchlorosilane tel que le triméthylchlorosilane ou le triéthylchlorosilane.

Ce silane est généralement appliqué sur le support en réalisant une suspension de ce support dans une solution organique du silane. Ce silane pourra par exemple être en concentration comprise entre 0,1 et 2 moles par litre dans cette solution. Le solvant de cette solution pourra être choisi parmi les hydrocarbures aliphatiques linéaires ou ramifiés comme l'hexane ou l'heptane, les hydrocarbures alicycliques éventuellement substitués comme le cyclohexane, les hydrocarbures aromatiques comme le toluène, le benzène ou le xylène. Le traitement du support par la solution du silane est généralement réalisé entre 50°C et 150°C, pendant 1 à 48 heures et sous agitation.

Après silanisation, le solvant est éliminé, par exemple par siphonnage ou filtration, le support étant alors lavé, de préférence abondamment, par exemple par 0,3 l de solvant par gramme de support.

Le taux surfacique du support en groupement hydroxyle peut être dosé selon des techniques connues telles que par exemple
- par réaction d'un organomagnésien comme CH₃Mgl sur le support, avec mesure de la quantité de méthane dégagé [M^{c} Daniel, J. Catal., 67, 71 (1981)],
- par réaction du triéthylaluminium sur le support, avec mesure de la quantité d'éthane dégagée [Thèse de Véronique Gaschard-Pasquet, Université Claude Bernard-LYON1, France, 1985, pages 221-224].

Le dérivé halogéné R¹M¹X¹₃ peut être choisi tel que M¹ soit le silicium et peut être choisi dans la liste suivante :
- éthyltrichlorosilane,
- n-propyltrichlorosilane,
- isopropyltrichlorosilane,
- n-butyltrichlorosilane,
- isobutyltrichlorosilane,
- tertiobutyltrichlorosilane,
- méthyltrichloroétain,
- phényltrichlorosilane.
et est de préférence le méthyltrichlorosilane.

Le composé C est capable de greffer au moins un groupement au squelette cycloalcadiényle L à l'atome M¹ appartenant à l'espèce fixée sur le support issue de R¹M¹X¹₃, par rupture d'au moins une liaison M¹―X¹ et formation d'au moins une liaison M¹―L.

Le groupement L peut comporter de 5 à 20 atomes de carbone. Un groupement au squelette cycloalcadiényle est soit un radical cycloalcadiényle, soit un radical cycloalcadiényle substitué, par exemple par un groupement hydrocarboné saturé ou non.

Un radical cycloalcadiényle est un radical comprenant un cycle d'atomes de carbone, ledit cycle comprenant au moins deux double-liaisons carbone-carbone, ledit radical étant relié au reste de la molécule le portant, par l'intermédiaire d'une liaison covalente avec l'un des atomes de carbone dudit cycle. Au moins l'un des atomes de carbone du cycle du radical cycloalcadiényle est lié à au moins un atome d'hydrogène, comme c'est le cas par exemple du radical tétraméthylcyclopentadiényle alors que ce n'est pas le cas du radical pentaméthylcyclopentadiényle.

L peut représenter le radical cyclopentadiényle, le radical indényle, le radical méthylcyclopentadiényle, le radical tétraméthylcyclopentadiényle. Le composé C peut par exemple être choisi parmi ceux représentés par les formules LY ou LMgX ou LSiZ¹Z²Z³ dans lesquelles Y représente un atome de lithium ou de sodium, X représente un atome de chlore, de brome ou d'iode, L représente un radical au squelette cycloalcadiényle comme précédemment défini, et Z¹, Z², Z³, pouvant être identiques ou différents représentent un radical hydrocarboné linéaire ou ramifié ou cyclique, pouvant comprendre un à vingt atomes de carbone, et pouvant être un radical alkyle, cycloalkyle, aryle, arylalkyle, alkylaryle.

Le composé C peut être obtenu par réaction d'un dérivé du cyclopentadiène et d'un composé déprotonnant.

Comme dérivé du cyclopentadiène, on peut citer le cyclopentadiène, le méthyl cyclopentadiène, l'éthyl cyclopentadiène, le propyl cyclopentadiène, le butyl cyclopentadiène, le pentyl cyclopentadiène, l'hexyl cyclopentadiène, le phényl cyclopentadiène, le 1-naphtyl cyclopentadiène, le 9-phénanthryl cyclopentadiène, le 10-anthracényl cyclopentadiène, le trifluoro méthyl cyclopentadiène, le méthoxy cyclopentadiène, l'éthoxy cyclopentadiène, le triméthylsilyl cyclopentadiène, le triméthyl siloxy cyclopentadiène, le monofluoro cyclopentadiène, le monochloro cyclopentadiène, le monobromo cyclopentadiène, le diméthyl cyclopentadiène, le diéthyl cyclopentadiène, le méthyl éthyl cyclopentadiène, le méthyl propyl cyclopentadiène, le méthyl butyl cyclopentadiène, le triméthyl cyclopentadiène, le tétraméthyl cyclopentadiène, l'indène, le 2-méthyl indène, le 2,4-diméthyl indène, le 2,6-diméthyl indène, le 2,7-diméthyl indène, le 2-méthyl-4-(i-propyl) indène, le 2-méthyl-4-phényl indène, le 2-méthyl-4-(1-naphtyl)indène, le 2-éthyl-4-(i-propyl)indène, le 2-butyl-4-(i-propyl)indène, le 4,5,6,7-tétrahydro indène, le 2-méthyl-4,5,6,7-tétrahydro indène, le fluorène, le 2,7-diméthyl fluorène, le 2,7-diéthyl fluorène, le 2,7-di(i-propyl) fluorène, le 2,7-di(t-butyl)fluorène, le 3,6-di(i-propyl)fluorène, le 3,6-di(t-butyl)fluorène.

Le composé déprotonnant peut être choisi dans la même famille que celle des agents déprotonnants D utilisés dans l'étape (c) et définis ci-après.

Pour préparer le composé C par une réaction de contact entre un dérivé du cyclopentadiène et un composé déprotonnant, on mélange le dérivé du cyclopentadiène et le composé déprotonnant dans un solvant inerte puis on fait réagir entre -78°C et 100°C par exemple entre 10 min et 96 heures,plus favorablement entre 1 h et 48 h. La réaction est effectuée sous une atmosphère de gaz inerte comme l'azote ou l'argon. Lors de la préparation du composé C, la quantité utilisée du composé déprotonnant et celle du dérivé de cyclopentadiène sont telles que le rapport molaire du composé déprotonnant sur le dérivé du cyclopentadiène va de 1 à 5, et de préférence de 1 à 2. La quantité de solvant inerte employée pour 1 millimole de dérivé de cyclopentadiène peut être comprise entre 1 et 50 ml, et de préférence entre 2 et 20 ml.

Comme solvant inerte utilisé lors de la préparation du composé C, on peut citer les hydrocarbures aliphatiques comme l'heptane ou l'hexane, les hydrocarbures aromatiques comme le benzène, le toluène, le xylène, le cumène, le cymène, les hydrocarbures alicycliques comme le cyclopentane, le cyclohexane, le cyclooctane, le méthylcyclopentane, le méthylcyclohexane, des composés de type éther comme le diéthyléther, le tétrahydrofurane. Parmi ces solvants, les hydrocarbures aromatiques sont préférés. Il n'est pas indispensable d'éliminer le solvant pour poursuivre la préparation de la composante catalytique solide selon l'invention. Cependant, si on veut l'éliminer, on peut le faire par les techniques habituelles de séparation. Si le composé C apparaît en solution dans le solvant, on peut par exemple procéder à sa cristallisation, par exemple à froid, puis éliminer le solvant par siphonage ou filtration. Si le composé C est en suspension dans le solvant, on peut procéder directement au siphonnage ou à la filtration pour enlever le solvant.

L'agent déprotonnant D est de formule R²M²X²ₙ dans laquelle R² représente un atome d'hydrogène ou un groupement hydrocarboné comme un groupement alkyle dont le nombre d'atomes de carbone est compris entre 1 et 20, un groupement aryle dont le nombre d'atomes de carbone est compris entre 6 et 20, ou un groupement aralkyle dont le nombre d'atomes de carbone est compris entre 7 et 20. Comme exemple de groupement alkyle dont le nombre d'atomes de carbone est compris entre 1 et 20, on peut citer : méthyle, éthyle, propyle, butyle, hexyle, cyclohexyle, octyle, nonyle, dodécyle, eicosyle.

Comme exemple de groupement aryle dont le nombre d'atomes de carbone est compris entre 6 et 20, on peut citer : phényle, tolyle, xylyle. Comme exemple de groupement aralkyle dont le nombre d'atomes de carbone est compris entre 7 et 20, on peut citer : benzyle, phényléthyle. Dans la formule R²M²X²n, X représente un atome d'halogène tel que le fluor, le chlore, le brome, l'iode.

Comme agent déprotonnant D, on peut citer le méthyl lithium, un butyllithium comme le n-butyl lithium, le sec-butyl lithium, le tert-butyl lithium, le phényl lithium, le benzyl lithium, le chlorure de méthyl magnésium, le chlorure d'éthyl magnésium, le bromure de phényl magnésium, l'hydrure de potassium, l'hydrure de sodium.

L'agent D est capable d'arracher un proton du groupement L. A titre d'exemple, cette réaction d'arrachement se produit, pour le cas où L comprend un groupement méthylène dans son cycle, et pour le cas où D est un dérivé du lithium, entre le groupement méthylène et D selon :

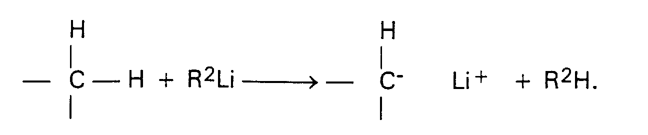

Le dérivé d'un métal de transition peut par exemple être représenté par la formule R³_{y-z}M³X_{z} dans laquelle R³ peut représenter un radical hydrocarboné comme par exemple un radical alkyle, cycloalkyle, aryle, aralkyle, alkylaryle comprenant de 1 à 20 atomes de carbone, M³ représente un métal de transition choisi parmi les éléments des groupes 4, 5, 6, 7, 8, 9 et 10 de la classification périodique des éléments, selon la nouvelle notation telle que définie dans le Handbook of Chemistry and Physics, soixante quinzième édition, 1994-1995 (ce qui correspond aux groupes IVB à VIII selon l'ancienne notation), ledit métal de transition étant de préférence choisi parmi le titane, le vanadium, le hafnium, le zirconium ou le chrome, et X représente un atome d'halogène tel que le chlore, le brome, l'iode. Les Lanthanides et actinides sont considérés comme faisant partie de la colonne 3 de la classification périodique des éléments selon la nouvelle notation (i.e. colonne IIIB de l'ancienne notation) et ne sont donc pas envisagés pour M³ dans le cadre de la présente demande.

Comme exemple d'un tel dérivé d'un métal de transition, on peut citer : TiCl₄, TiBr₄, Til₄, ZrCl₄, ZrBr₄, Zrl₄, HfCl₄, HfBr₄, Hfl₄, VCl₄, NbCl₄, TaCl₅, MoCl₅, WCl₅. Parmi eux, il est préférable d'utiliser un halogénure de titane, un halogénure de zirconium ou un halogénure d'hafnium.

Le dérivé d'un métal de transition peut également être un complexe entre un des composés de formule R³_{y-z}M³X_{z} décrits plus haut et un composé donneur d'électrons comme le tétrahydrofurane.

Pour la réalisation de l'étape (a), le support et le dérivé halogéné peuvent être mis en contact en présence d'un solvant inerte, lequel peut par exemple être choisi parmi les hydrocarbures aliphatiques comme l'hexane ou l'heptane, les hydrocarbures aromatiques comme le benzène, le toluène, le xylène, le cumène, le cymène, les hydrocarbures alicycliques comme le cyclopentane, le cyclohexane, le cyclooctane, le méthylcyclopentane, le méthylcyclohexane, les éthers comme le diéthyléther, le tétrahydrofurane, sous une atmosphère d'un gaz inerte comme l'azote ou l'argon.

Le rapport molaire du dérivé halogéné sur les groupements hydroxyles de surface du support est généralement compris entre 0,5 et 30, et va de préférence de 1 à 20. De préférence, on utilise 5 à 100 ml et de manière encore préférée 10 à 50 ml de solvant inerte par gramme de support. Cette mise en contact peut être réalisée entre 80 et 150 °C, sous agitation, le cas échéant sous pression si la nature du solvant le nécessite. A l'issue de l'étape (a), il convient de laver le solide S¹ par un solvant inerte du type de ceux proposés pour la réalisation de ladite étape (a). Le solide S¹ peut ensuite être récupéré par siphonnage ou filtration.

Pour la réalisation de l'étape (b), le solide S¹ et le composé C peuvent être mis en contact en présence d'un solvant inerte, lequel peut par exemple être choisi parmi les hydrocarbures aliphatiques comme l'hexane ou l'heptane, les hydrocarbures aromatiques comme le benzène, le toluène, le xylène, le cumène, le cymène, les hydrocarbures alicycliques comme le cyclopentane, le cyclohexane, le cyclooctane, le méthylcyclopentane, le méthylcyclohexane, les éthers comme le diéthyléther, le tétrahydrofurane, de préférence sous une atmosphère d'un gaz inerte comme l'azote ou l'argon. Cette mise en contact peut être réalisée entre -78 et 140°C, de préférence entre 0 et 110°C, par exemple entre 1 et 48 heures.

Pour cette mise en contact, la quantité de S¹ et la quantité de composé C sont telles que le rapport molaire de la quantité de C sur la quantité de dérivé halogéné utilisé lors de l'étape (a) pour obtenir ladite quantité de S¹, va de préférence de 2 à 10 et manière encore préférée de 2 à 4.

De préférence, on utilise 50 ml de solvant inerte par gramme de S¹.

Après cette mise en contact, le solide S² obtenu peut être isolé par filtration ou après siphonnage du solvant. Il est préférable de laver S² abondamment, par exemple par 300 ml de solvant inerte par gramme de S².

Pour la réalisation de l'étape (c), le solide S² et l'agent déprotonnant D peuvent être mis en contact en présence d'un solvant inerte, lequel peut être par exemple être choisi parmi les hydrocarbures aromatiques comme le benzène, le toluène, le xylène, le cumène, le cymène, les hydrocarbures alicycliques comme le cyclopentane, le cyclohexane, le cyclooctane, le méthylcyclopentane, le méthylcyclohexane, les éthers comme le diéthyléther, le tétrahydrofurane, de préférence sous une atmosphère d'un gaz inerte comme l'azote ou l'argon. Cette mise en contact peut être réalisée entre -78 et 110°C, et de préférence entre -30 et 100°C, par exemple entre 1 et 48 heures. Pour cette mise en contact, la quantité de S² et la quantité de D sont telles que le rapport molaire de la quantité de D sur la quantité de composé C utilisée lors de l'étape (b) pour obtenir ladite quantité de S² va de préférence de 1 à 10, et de manière encore préférée de 1 à 5.

De préférence, on utilise 20 à 100 ml de solvant par gramme de S². Après cette mise en contact de l'étape (c), le solide S³ obtenu peut être isolé par filtration ou siphonnage du solvant. Il est préférable de laver S³ abondamment, par exemple par 300 ml de solvant inerte par gramme de S³.

Pour la réalisation de l'étape (d), le solide S³ et le dérivé d'un métal de transition peuvent être mis en contact en présence d'un solvant inerte, lequel peut par exemple être choisi parmi les hydrocarbures aliphatiques comme l'hexane ou l'heptane, les hydrocarbures aromatiques comme le benzène, le toluène, le xylène, le cumène, le cymène, les hydrocarbures alicycliques comme le cyclopentane, le cyclohexane, le cyclooctane, le méthylcyclopentane, le méthylcyclohexane, les éthers comme le diéthyléther, le tétrahydrofurane, de préférence sous une atmosphère d'un gaz inerte comme l'azote ou l'argon. Cette mise en contact peut être réalisée entre -100°C et 110°C, et de préférence entre -80°C et 100°C, par exemple entre 1 et 48 heures. Pour cette mise en contact, la quantité de S³ et la quantité de dérivé d'un métal de transition sont telles que le rapport molaire de la quantité de dérivé d'un métal de transition sur la quantité de D utilisé lors de l'étape (c) pour obtenir ladite quantité de S³, va de préférence de 0,5 à 5 et de manière encore préférée de 0,5 à 3. De préférence, on utilise 5 à 50 ml de solvant par gramme de S³. A l'issue de cette réaction, la composante catalytique solide obtenue peut être isolée par filtration, lavée, par exemple par 300 ml de solvant inerte par gramme de composante catalytique solide, puis séchée sous une atmosphère d'un gaz inerte tel que l'azote ou l'argon, par exemple de 0 à 80 °C, le cas échéant sous vide.

De préférence, la composante catalytique solide selon l'invention comprend de 0,02 à 2 et de préférence de 0,05 à 1 millimole de métal de transition par gramme, et il est recommandé d'utiliser le procédé selon l'invention de façon à obtenir une telle teneur dans la composante catalytique solide.

La composante catalytique peut être engagée en polymérisation ou copolymérisation d'au moins une oléfine. Par oléfine, on entend plus particulièrement celles comprenant deux à vingt atomes de carbone et en particulier les alpha-oléfines de ce groupe. Comme oléfine, on peut citer l'éthylène, le propylène, le 1-butène, le 4-méthyl-1-pentène, le 1-octène, le 1-hexène, le 3-méthyl-1-pentène, le 3-méthyl-1-butène, le 1-décène, le 1-tétradécène ou les mélanges d'au moins deux de ces oléfines. La composante selon l'invention peut être introduite dans les procédés de polymérisation ou copolymérisation en suspension, en solution ou en phase gazeuse, dans les conditions habituelles pour ce genre de composante catalytique. Pour le cas où l'on cherche à obtenir un polymère ou copolymère présentant une forme sensiblement homothétique de celle de la composante catalytique, il convient de choisir un procédé en suspension ou en phase gazeuse.

Un procédé de polymérisation ou copolymérisation en suspension consiste à réaliser une polymérisation ou copolymérisation dans un milieu inerte ne solubilisant pas ou très peu le polymère ou copolymère en formation. Pour un tel procédé, on peut choisir comme milieu inerte le n-heptane, le n-hexane, l'isohexane, l'isobutane ou un mélange d'isomères d'heptane, et l'on peut opérer à des températures allant jusqu'à 250° C et sous des pressions allant de la pression atmosphérique à 250 bars.

Un procédé de polymérisation en phase gazeuse peut être mis en oeuvre à l'aide de tout réacteur permettant une polymérisation en phase gazeuse et en particulier dans un réacteur à lit agité et/ou à lit fluidisé.

Les conditions de mise en oeuvre de la polymérisation en phase gazeuse, notamment température, pression, injection de l'oléfine ou des oléfines dans le réacteur à lit agité et/ou lit fluidisé, contrôle de la température et de la pression de la polymérisation, sont analogues à celles proposées dans l'art antérieur pour la polymérisation en phase gazeuse des oléfines. On opère généralement à une température inférieure au point de fusion Tf du polymère ou prépolymère à synthétiser, et plus particulièrement comprise entre +20° C et (Tf-5)° C, et sous une pression telle que l'oléfine ou les oléfines soient essentiellement en phase vapeur.

Suivant la nature du dérivé d'un métal de transition, il peut être nécessaire d'introduire dans le milieu de polymérisation ou copolymérisation un cocatalyseur capable d'activer ledit métal de transition. Par exemple, lorsque le dérivé d'un métal de transition est le titane, le zirconium ou le hafnium, le cocatalyseur peut être choisi parmi les dérivés organiques de l'aluminium.

Ce dérivé organique de l'aluminium peut être un dérivé de formule R⁷R⁸R⁹Al dans laquelle R⁷, R⁸ et R⁹ pouvant être identiques ou différents, représentent chacun, soit un atome d'hydrogène, soit un atome d'halogène, soit un groupe alkyle contenant de 1 à 20 atomes de carbone, l'un au moins de R⁷, R⁸ ou R⁹ représentant un groupe alkyle. A titre d'exemple de composé adapté, on peut citer le dichlorure ou dibromure ou dihydrure d'éthylaluminium, le dichlorure ou dibromure ou dihydrure d'isobutylaluminium, le chlorure ou bromure ou hydrure de diéthylaluminium, le chlorure ou bromure ou hydrure de di-n-propylaluminium, le chlorure ou bromure ou hydrure de diisobutylaluminium. De préférence aux composés précités, on utilise un trialkylaluminium tel que le tri-n-hexylaluminium, le triisobutylaluminium, le triméthylaluminium, ou le triéthylaluminium.

Le cocatalyseur peut également être un aluminoxane. Cet aluminoxane peut être linéaire, de formule 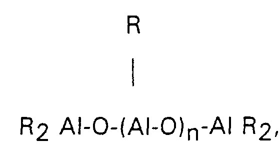 ou cyclique de formule 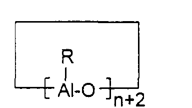 R représentant un radical alkyle comprenant de un à six atomes de carbone, et n étant un nombre entier allant de 0 à 40, de préférence de 0 à 20. L'aluminoxane peut comporter des groupements R de nature différente. De préférence, les groupements R représentent tous des groupements méthyle. Par ailleurs, par cocatalyseur, on entend également les mélanges des composés précités.

Les quantités de cocatalyseur utilisées doivent être suffisantes pour activer le métal de transition. Généralement, lorsqu'un dérivé organique de l'aluminium est utilisé comme cocatalyseur, on en introduit une quantité telle que le rapport atomique de l'aluminium apporté par le cocatalyseur sur le ou les métaux de transition que l'on souhaite activer aille de 0,5 à 10000 et de préférence de 1 à 5000.

La polymérisation ou copolymérisation peut faire intervenir un agent de transfert de chaînes, de manière à contrôler l'indice de fluidité du polymère ou copolymère à produire. Comme agent de transfert de chaîne, on peut utiliser l'hydrogène, que l'on introduit en quantité pouvant aller jusqu'à 90 %, et se situant de préférence entre 0,01 et 60 % en mole de l'ensemble oléfines et hydrogène amené au réacteur.

Pour le cas où l'on souhaite un excellent contrôle morphologique des particules, il est recommandé de réaliser une prépolymérisation en suspension ou, de préférence, en phase gazeuse, sur les particules de composante catalytique solide, puis d'introduire les particules de prépolymère ainsi obtenues dans le procédé de polymérisation ou copolymérisation en suspension ou en phase gazeuse. La prépolymérisation est effectuée jusqu'à un degré adapté au procédé de polymérisation dans lequel le prépolymère sera ultérieurement mis en oeuvre.

Le terme prépolymère couvre bien entendu les copolymères obtenus par copolymérisation à faible degré d'avancement. Le terme prépolymérisation couvre donc également une copolymérisation au faible degré d'avancement.

Dans les exemples qui suivent, on a utilisé les techniques suivantes :
- détermination de la quantité de groupements hydroxyles en surface: par réaction du triéthylaluminium sur le support, avec mesure de la quantité d'éthane dégagée [Thèse de Véronique Gashard-Pasquet, Université Claude Bernard-LYON1, France, 1985, pages 221-224].
- masse moléculaire moyenne en poids (Mw) : par chromatographie par exclusion stérique à 140°C dans le 1,3,5-trichlorobenzène.

### EXEMPLE 1

### 1. SYNTHESE D'UNE COMPOSANTE CATALYTIQUE SOLIDE

a) On porte 3 g de silice de marque Grace 332 à 550°C pendant 2 heures sous un courant d'azote de 60 ml par min. selon le programme de température suivant :
   - de 20 à 100 °C en 30 min ; de 100 à 130°C en 30 min ; de 130 à 550°C en 1h30 min ; palier à 550°C pendant 2 heures, puis retour à la température ambiante par refroidissement naturel.

   Ce traitement conduit à une silice comportant 0,8 millimole de groupements hydroxyles par gramme de silice.
b) 2 g de la silice préparée au a) sont mis en suspension dans 30 ml de toluène, puis 0,3 g de CH₃SiCl₃ (soit 2 millimoles de CH₃SiCl₃)est introduit. Le milieu est alors chauffé 48 heures à 100°C. Le solide est filtré puis lavé quatre fois avec à chaque fois 40 ml de toluène.
c) Dans 30 ml de toluène, on place 3 millimoles d'indène, puis l'on introduit goutte à goutte 3,5 millimoles de butyllithium (BuLi) sous la forme d'une solution à 1,6 mole par litre dans l'hexane.
On laisse la réaction s'effectuer à 20°C pendant 24 heures, puis l'on chauffe 1 heure à 80°C, puis on laisse revenir à la température ambiante.
d) La totalité du solide obtenu au b) est mélangée avec la totalité de la solution d'indényllithium préparée au c). Ce mélange est porté à 100°C pendant 76 heures, puis après retour à la température ambiante, le solide obtenu est filtré et lavé 4 fois par 50 ml de toluène à chaque fois.
e) Le solide obtenu en d) est placé dans 30 ml de toluène auquel on ajoute 3,5 millimoles de BuLi. On laisse le mélange 24 heures à température ambiante. Le solide obtenu est ensuite filtré et lavé 4 fois avec 40 ml de toluène à chaque fois.
f) Dans 30 ml de toluène, on place 4,3 millimoles de ZrCl₄ sous la forme de poudre cristallisée et l'on introduit goutte à goutte 0,7 ml de tétrahydrofurane (THF). Ce mélange est porté à 100°C pendant 24 heures.
g) La suspension préparée au f) est mélangée avec le solide préparé au e) et l'ensemble est porté à 100°C pendant 24 heures puis refroidit à la température ambiante.
   La composante catalytique solide obtenue est filtrée et lavée 4 fois par 40 ml de toluène, puis séchée sous 10 mbars d'argon à 40°C pendant une heure.

### 2. POLYMERISATION DE L'ETHYLENE

Dans un ballon en verre de 1 l, on place 330 ml d'heptane et une quantité de méthylaluminoxane contenant 3,3 millimoles d'aluminium, ledit aluminoxane étant de marque WITCO et sous la forme d'une solution à 2 millimoles d'aluminium par litre de toluène, et 9 mg de la composante catalytique solide. Cette suspension est introduite dans un réacteur en verre de 1 litre purgé à l'argon et agité. L'éthylène est polymérisé en suspension sous 4 bars à 22°C pendant 1 heure. On récupère 21 g de polymère de polymolécularité égale à 2,1 et de Mw = 969600.

### EXEMPLE 2

On procède comme pour l'exemple 1 sauf que pour la polymérisation :
- on introduit 11 mg de composante catalytique solide,
- la polymérisation est menée à 80°C pendant 5 minutes.

L'activité a été de 25 000 g/g.h.

### EXEMPLE 3

### 1. SYNTHESE D'UNE COMPOSANTE CATALYTIQUE SOLIDE

Dans un tube de Schlenk, on place 2,4 millimoles de ZrCl4 sous la forme de poudre, en suspension dans 30 ml de toluène. Cette suspension est refroidie à -15°C, puis l'on y ajoute au goutte à goutte 4,8 millimoles de BuLi sous la forme d'une solution à 1,6 moles/litre dans l'hexane.

On laisse la réaction s'effectuer pendant 20 heures, tout en laissant la température revenir naturellement à la température ambiante. Après refroidissement du mélange à 0°C, on lui ajoute alors 2,7 g du solide obtenu à l'issue de l'étape e) de l'exemple 1. On laisse la réaction s'effectuer pendant 24 heures, tout en laissant la température revenir naturellement à la température ambiante.

La composante catalytique solide obtenue est filtrée et lavée 4 fois avec 40 ml de toluène à chaque fois puis séchée sous 10 mbars d'un courant d'argon à 40°C pendant 30 minutes.

### 2. POLYMERISATION DE L'ETHYLENE

Dans un ballon en verre de 1 l, on place 350 ml d'heptane et une quantité de méthylaluminoxane contenant 3,5 millimoles d'aluminium, ledit aluminoxane étant de marque WITCO et sous la forme d'une solution à 2 millimoles d'aluminium par litre de toluène, et 86 mg de la composante catalytique solide. La polymérisation de l'éthylène est menée dans les mêmes conditions que pour l'exemple 2. La productivité est de 150 g/g en 35 minutes.

### EXEMPLE 4 (comparatif)

### 1. SYNTHESE D'UNE COMPOSANTE CATALYTIQUE SOLIDE

a) On place 2,9 g de silice traitée comme dans a) de l'exemple 1, dans 30 ml de toluène, puis l'on introduit 1,1 millimole de SiCl₄ goutte à goutte. On porte cette suspension au reflux pendant 48 heures. Le solide obtenu est filtré et lavé par 2 fois 50 ml de THF.
b) Dans un tube de Schlenk de 100ml, on introduit 0,35 ml d'indène dans 30 ml de THF puis l'on ajoute au goutte à goutte 3 millimoles de BuLi sous la forme d'une solution à 1,6 mole/litre dans l'hexane à 0°C et on laisse la solution revenir à la température ambiante. On laisse la réaction se poursuivre à la température ambiante pendant 14 heures.
c) Après l'avoir refroidi à 0°C, on introduit la solution préparée au b) dans un tube contenant le solide préparé en a), lui même préalablement refroidi à 0°C, et l'on ajoute 10 ml de THF refroidi à 0°C. On laisse le mélange revenir à la température ambiante et on laisse encore 14 heures à cette température. Le solide obtenu est filtré et lavé 3 fois par 50 ml de THF à chaque fois, puis séché sous 10 mbar d'argon, 1 heure à 20°C.
d) Le solide obtenu en c) est placé dans 30 ml de tétrahydrofurane (THF) refroidi à 0°C, auxquels on ajoute 3 millimoles de BuLi préalablement refroidi à 0°C. On laisse le mélange revenir à la température ambiante, et on le laisse à cette température pendant 24 heures. Le solide obtenu est ensuite filtré et lavé 3 fois avec 50 ml de THF à chaque fois.
e) On place 2,5 millimoles de ZrCl4 sous la forme de poudre en suspension dans 30ml de toluène. Après un ajout de 5 millimoles de THF, on chauffe à 100°C pendant 48 heures. Le solvant est ensuite éliminé par siphonnage à température ambiante. On ajoute alors 0,25 mole de THF.
f) On place le solide obtenu en d) dans 0,37 mole de THF (30 ml) et l'on ajoute au goutte à goutte la solution préparée en e). On laisse la réaction s'effectuer pendant 24 heures à la température ambiante. La composante catalytique solide est filtrée et lavée quatre fois par 50 ml de THF à chaque fois.

### 2. POLYMERISATION DE L'ETHYLENE

Dans un ballon de 1l, on place 360 ml d'heptane, une quantité de méthylaluminoxane contenant 3,6 millimoles d'aluminium, ledit méthylaluminoxane étant sous la forme d'une solution à 2 millimoles d'aluminium par litre dans le toluène, et 19 mg de la composante catalytique solide. La polymérisation de l'éthylène est menée à 4 bars, 80°C pendant 1/2 heure. L'activité a été d'environ 1g/g.h.

### EXEMPLE 5

On procède comme pour l'exemple 4, sauf que l'on remplace le SiCl₄ par le même nombre de moles de CH₃SiCl₃. L'activité a été de 50g/g.h.

### EXEMPLE 6 (comparatif)

On procède comme dans l'exemple 14 de la demande de brevet JP07316219. On obtient en 20 heures une productivité de 0,35 g de polypropylène par heure et par gramme de composante catalytique solide.

### EXEMPLE 7

On procède comme pour l'exemple 6 sauf que l'on remplace le SiCl₄ par le même nombre de moles de CH₃SiCl₃. On obtient en 1 heure une productivité de 4 g de polypropylène par heure et par gramme de composante catalytique solide.

### EXEMPLE 8

Dans un ballon en verre de 1 litre, on place 500 ml d'heptane, une quantité de méthylaluminoxane contenant 5 millimoles d'aluminium, ledit méthylaluminoxane étant sous la forme d'une solution à 2 millimoles d'aluminium par litre de toluène, et 48 mg de la composante catalytique solide préparée au §1 de l'exemple 1. La suspension obtenue est ensuite introduite dans un réacteur de 1 litre sous argon et sous agitation, et le propylène y est polymérisé sous 4 bars à 70°C pendant 3 heures. Le polymère obtenu est atactique. La productivité a été de 260 g de polymère par gramme de composante en une heure.

### EXEMPLE 9

Dans un tube de schlenk, on introduit 99 g de polyéthylène haute densité sous forme de poudre, 15 ml d'une solution de méthylaluminoxane à 30 % en poids dans le toluène soit 70 millimoles d'aluminium et 0,64 g de la composante catalytique solide préparée selon l'exemple 1. Le milieu est maintenu sous agitation, à température ambiante pendant 15 minutes. Le solide est séché en tirant sous vide (10 mbars d'azote) à température ambiante pendant 2 heures.

### 1. PREPOLYMERISATION DE L'ETHYLENE EN PHASE GAZEUSE

La poudre fluide obtenue est introduite dans un réacteur métallique agité de 2 litres purgé à l'azote. La température est portée à 60°C. On alimente alors le réacteur sous agitation avec un débit d'éthylène de 8l/h pendant 30 minutes. Le débit est ensuite doublé pendant une période de temps égale. Enfin, le réacteur est alimenté avec 32 l/h d'éthylène pendant 130 minutes. L'éthylène est ensuite éliminé du réacteur et remplacé par de l'azote à pression normale. On récupère sous atmosphère d'azote, dans un tube de schlenk, 183,7 g de polyéthylène contenant 233 ppm de zirconium et 3000 ppm d'aluminium.

### 2. POLYMERISATION DE L'ETHYLENE EN PHASE GAZEUSE

Dans un réacteur agité métallique de 8 litres, on introduit 10 g de prépolymère préparé ci-dessus. Sous agitation, la température est élevée à 85°C. Le réacteur est alimenté avec 10 bars d'éthylène. La pression est maintenue constante tout au long de la polymérisation par une alimentation d'éthylène en continu. Après 2 heures de polymérisation, l'éthylène est éliminé du réacteur et la température abaissée à 30°C. On récupère alors 297 g de polymère soit une productivité de 8500 g de polyéthylène par gramme de composante catalytique solide.

## Revendications

1. Procédé de préparation d'une composante catalytique solide pour la polymérisation ou copolymérisation des oléfines comprenant
- une étape (a) de réaction entre un support sous forme de particules et un dérivé halogéné pouvant être représenté par la formule R¹M¹X¹₃ dans laquelle R¹ représente un radical hydrocarboné, M¹ représente un atome de silicium, de germanium ou d'étain, X¹ représente un atome d'halogène, pour obtenir un solide S¹, puis
- une étape (b) de réaction entre le solide S¹ et un composé C capable de greffer au moins un groupement au squelette cycloalcadiényle L à l'atome M¹ appartenant à l'espèce fixée sur le support et issue de R¹M¹X¹₃, au moins l'un des atomes de carbone du cycle du radical cycloalcadiényle étant lié à au moins un atome d'hydrogène, pour obtenir un solide S², puis
- une étape (c) de réaction entre le solide S² et un agent déprotonnant D pouvant être représenté par la formule R²M²X²n dans laquelle R² représente un atome d'hydrogène ou un groupement hydrocarboné, M² représente un atome de lithium, sodium, potassium ou magnésium, X² représente un atome d'halogène, n représente un nombre égal à 0 si M² est un atome de lithium, sodium ou potassium, ou égal à 1 si M² est un atome de magnésium, pour obtenir un solide S³, puis
- une étape (d) de réaction entre le solide S³ et un dérivé d'un métal de transition de formule R³_{y-z}M³X_{z} dans laquelle R³ représente un radical hydrocarboné, M³ représente un métal de transition des groupes 4, 5, 6, 7, 8, 9 et 10 de la classification périodique des éléments, X représente un halogène, y et z représentent des nombres entiers, y étant égal à 3 ou 4 et z allant de 1 à y.

2. Procédé selon la revendication 1 caractérisé en ce que le support est un oxyde minéral poreux présentant à sa surface 0,5 à 10 groupements hydroxyles par nm².

3. Procédé selon la revendication 2 caractérisé en ce que le support présente à sa surface 1 à 8 groupements hydroxyles par nm².

4. Procédé selon l'une des revendications 1 à 3 caractérisé en ce que le support présente une porosité allant de 1 à 4 cm³/g, une surface allant de 100 à 600 m²/g et un diamètre moyen de taille de particules allant de 10 à 100 *µ*m.

5. Procédé selon l'une des revendications **1** à **4** caractérisé en ce que M¹ est le silicium.

6. Procédé selon la revendication 5 caractérisé en ce que le dérivé halogéné est le méthyltrichlorosilane.

7. Procédé selon l'une des revendications 1 à 6 caractérisé en ce que L est un radical cyclopentadiényle ou indényle, ou méthylcyclopentadiényle ou tétraméthylcyclopentadiényle.

8. Procédé selon l'une des revendications 1 à 7 caractérisé en ce que D est un butyllithium.

9. Procédé selon l'une des revendications précédentes caractérisé en ce que le métal de transition M³ est choisi parmi le titane, le vanadium, le hafnium, le zirconium ou le chrome.

10. Procédé selon l'une des revendications 1 à 8 caractérisé en ce que le dérivé d'un métal de transition est choisi parmi TiCl₄, TiBr₄, Til₄, ZrCl₄, ZrBr₄, Zrl₄, HfCl₄, HfBr₄, Hfl₄, VCl₄, NbCl₄, TaCl₅, MoCl₅, WCl₅.

11. Procédé selon l'une des revendications précédentes caractérisé en ce que le dérivé d'un métal de transition est un halogénure de titane, ou un halogénure de zirconium, ou un halogénure d'hafnium.

12. Procédé selon l'une des revendications précédentes caractérisé en ce que le dérivé d'un métal de transition est le ZrCl₄.

13. Procédé selon l'une des revendications précédentes caractérisé en ce que le rapport molaire du dérivé halogéné sur les groupements hydroxyles de surface du support est compris entre 0,5 et 30 et va de préférence de 1 à 20.

14. Procédé selon l'une des revendications précédentes caractérisé en ce que le rapport molaire de la quantité de C sur la quantité de dérivé halogéné va de 2 à 10 et de préférence de 2 à 4.

15. Procédé selon l'une des revendications précédentes caractérisé en ce que le rapport molaire de la quantité de D sur la quantité de C va de 1 à 10 et de préférence de 1 à 5.

16. Procédé selon l'une des revendications précédentes caractérisé en ce que le rapport molaire de la quantité de dérivé d'un métal de transition sur la quantité de D va de 0,5 à 5 et de préférence de 0,5 à 3.

17. Composante catalytique solide susceptible d'être obtenue par le procédé de l'une des revendications précédentes.

18. Procédé de polymérisation ou copolymérisation en suspension ou en phase gazeuse d'au moins une oléfine en présence de la composante de la revendication 17.

19. Procédé selon la revendication 18 caractérisé en ce que au moins une oléfine est l'éthylène.

20. Procédé selon la revendication 18 caractérisé en ce que au moins une oléfine est le propylène.

## Patentansprüche

1. Verfahren zur Herstellung einer festen katalytischen Komponente zur Polymerisation oder Copolymerisation von Olefinen mit
- einem Schritt (a) einer Reaktion zwischen einem in Partikelform vorliegenden Träger und einer halogenierten Verbindung, die durch die Formel R¹M¹X¹₃ dargestellt werden kann, in der R¹ einen Kohlenwasserstoffrest, M¹ ein Silicium-, Germanium- oder Zinnatom und X¹ ein Halogenatom bedeutet, um einen Feststoff S¹ zu erhalten, dann
- einem Schritt (b) einer Reaktion zwischen dem Feststoff S¹ und einer Verbindung C, die dazu geeignet ist, mindestens eine Gruppierung am Cycloalcadienylgerüst L auf das Atom M¹ zu pfropfen, das zu der an den Träger gebundenen und aus R¹M¹X¹₃ entstandenen Spezies gehört, wobei mindestens eines der Kohlenstoffatome des Rings des Cycloalkadienylrestes an mindestens ein Wasserstoffatom gebunden ist, um einen Feststoff S² zu erhalten, dann
- einem Schritt (c) einer Reaktion zwischen dem Feststoff S² und einem Deprotonierungsmittel D, das durch die Formel R²M²X²ₙ dargestellt werden kann, in der R² ein Wasserstoffatom oder eine Kohlenwasserstoffgruppe, M² ein Lithium-, Natrium-, Kalium- oder Magnesiumatom, X² ein Halogenatom und n eine Zahl gleich 0, wenn M² ein Lithium-, Natrium- oder Kaliumatom ist, oder gleich 1 bedeutet, wenn M² ein Magnesiumatom ist, um einen Feststoff S³ zu erhalten, dann
- einem Schritt (d) einer Reaktion zwischen dem Feststoff S³ und einer Übergangsmetallverbindung der Formel R³_{y-z}M³X_{z}, in der R³ einen Kohlenwasserstoffrest, M³ ein Übergangsmetall der Gruppen 4, 5, 6, 7, 8, 9 und 10 des periodischen Systems der Elemente und X ein Halogenatom bedeutet sowie y und z ganze Zahlen bedeuten, wobei y gleich 3 oder 4 ist und z von 1 bis y reicht.

2. Verfahren nach Anspruch 1, dadurch gekennzeichnet, daß der Träger ein poröses mineralisches Oxid ist, das auf seiner Oberfläche 0,5 bis 10 Hydroxylgruppen pro nm² hat.

3. Verfahren nach Anspruch 2, dadurch gekennzeichnet, daß der Träger auf seiner Oberfläche 1 bis 8 Hydroxylgruppen pro nm² hat.

4. Verfahren nach einem der Ansprüche 1 bis 3, dadurch gekennzeichnet, daß der Träger eine Porosität von 1 bis 4 cm³/g, eine Oberfläche von 100 bis 600 m²/g und einen mittleren Durchmesser der Teilchengröße von 10 bis 100 µm hat.

5. Verfahren nach einem der Ansprüche 1 bis 4, dadurch gekennzeichnet, daß M¹ Silicium ist.

6. Verfahren nach Anspruch 5, dadurch gekennzeichnet, daß die halogenierte Verbindung Methyltrichlorsilan ist.

7. Verfahren nach einem der Ansprüche 1 bis 6, dadurch gekennzeichnet, daß L ein Cyclopentadienyl- oder Indenyl- oder Methylcyclopentadienyl- oder Tetramethylcyclopentadienylrest ist.

8. Verfahren nach einem der Ansprüche 1 bis 7, dadurch gekennzeichnet, daß D ein Buthyllithium ist.

9. Verfahren nach einem der vorangehenden Ansprüche, dadurch gekennzeichnet, daß das Übergangsmetall M³ aus Titan, Vanadium, Hafnium, Zirconium oder Chrom gewählt ist.

10. Verfahren nach einem der Ansprüche 1 bis 8, dadurch gekennzeichnet, daß die Übergangsmetallverbindung aus TiCl₄, TiBr₄, TiI₄, ZrCl₄, ZrBr₄, ZrI₄, HfCl₄, HfBr₄, HfI₄, VCl₄, NbCl₄, TaCl₅, MoCl₅, WCl₅ gewählt ist.

11. Verfahren nach einem der vorangehenden Ansprüche, dadurch gekennzeichnet, daß die Übergangsmetallverbindung ein Titanhalogenid oder ein Zirconiumhalogenid oder ein Hafniumhalogenid ist.

12. Verfahren nach einem der vorangehenden Ansprüche, dadurch gekennzeichnet, daß die Übergangsmetallverbindung ZrCl₄ ist.

13. Verfahren nach einem der vorangehenden Ansprüche, dadurch gekennzeichnet, daß das Molverhältnis der halogenierten Verbindung zu den Hydroxylgruppen der Trägeroberfläche zwischen 0,5 und 30 liegt und vorzugsweise von 1 bis 20 reicht.

14. Verfahren nach einem der vorangehenden Ansprüche, dadurch gekennzeichnet, daß das Molverhältnis der Menge an C zur Menge der halogenierten Verbindung von 2 bis 10 und vorzugsweise von 2 bis 4 reicht.

15. Verfahren nach einem der vorangehenden Ansprüche, dadurch gekennzeichnet, daß das Molverhältnis der Menge an D zur Menge an C von 1 bis 10 und vorzugsweise von 1 bis 5 reicht.

16. Verfahren nach einem der vorangehenden Ansprüche, dadurch gekennzeichnet, daß das Molverhältnis der Menge der Übergangsmetallverbindung zur Menge an D von 0,5 bis 5 und vorzugsweise von 0,5 bis 3 reicht.

17. Feste katalytische Komponente, die geeignet ist, durch das Verfahren nach einem der vorangehenden Ansprüche erhalten zu werden.

18. Verfahren zur Polymerisation oder Copolymerisation in Suspension oder in der Gasphase mindestens eines Olefins in Gegenwart der Komponente nach Anspruch 17.

19. Verfahren nach Anspruch 18, dadurch gekennzeichnet, daß mindestens ein Olefin Ethylen ist.

20. Verfahren nach Anspruch 18, dadurch gekennzeichnet, daß mindestens ein Olefin Propylen ist.

## Claims

1. Process for the preparation of a solid catalytic component for the polymerization or copolymerization of olefins comprising
- a stage (a) of reaction between a support in the form of particles and a halogenated derivative which can be represented by the formula R¹M¹X¹₃, in which R¹ represents a hydrocarbon radical, M¹ represents a silicon, germanium or tin atom and X¹ represents a halogen atom, in order to obtain a solid S¹, then
- a stage (b) of reaction between the solid S¹ and a compound C capable of grafting at least one group with the cycloalkadienyl skeleton L to the atom M¹ belonging to the species fixed to the support and resulting from R¹M¹X¹₃, at least one of the carbon atoms of the ring of the cycloalkadienyl radical being bonded to at least one hydrogen atom, in order to obtain a solid S², then
- a stage (c) of reaction between the solid S² and a deprotonating agent D which can be represented by the formula R²M²X²ₙ, in which R² represents a hydrogen atom or a hydrocarbon group, M² represents a lithium, sodium, potassium or magnesium atom, X² represents a halogen atom and n represents a number equal to 0, if M² is a lithium, sodium or potassium atom, or equal to 1, if M² is a magnesium atom, in order to obtain a solid S³, then
- a stage (d) of reaction between the solid S³ and a derivative of a transition metal of formula R³_{y-z}M³X_{z}, in which R³ represents a hydrocarbon radical, M³ represents a transition metal from groups 4, 5, 6, 7, 8, 9 and 10 of the periodic classification of the elements, X represents a halogen and y and z represent integers, y being equal to 3 or 4 and z ranging from 1 to y.

2. Process according to Claim 1, characterized in that the support is a porous inorganic oxide exhibiting, at its surface, 0.5 to 10 hydroxyl groups per nm².

3. Process according to Claim 2, characterized in that the support exhibits, at its surface, 1 to 8 hydroxyl groups per nm².

4. Process according to one of Claims 1 to 3, characterized in that the support exhibits a porosity ranging from 1 to 4 cm³/g, a specific surface ranging from 100 to 600 m²/g and a mean particle size diameter ranging from 10 to 100 µm.

5. Process according to one of Claims 1 to 4, characterized in that M¹ is silicon.

6. Process according to Claim 5, characterized in that the halogenated derivative is methyltrichlorosilane.

7. Process according to one of Claims 1 to 6, characterized in that L is a cyclopentadienyl or indenyl or methylcyclopentadienyl or tetramethylcyclopentadienyl radical.

8. Process according to one of Claims 1 to 7, characterized in that D is a butyllithium.

9. Process according to one of the preceding claims, characterized in that the transition metal M³ is chosen from titanium, vanadium, hafnium, zirconium or chromium.

10. Process according to one of Claims 1 to 8, characterized in that the derivative of a transition metal is chosen from TiCl₄, TiBr₄, TiI₄, ZrCl₄, ZrBr₄, ZrI₄, HfCl₄, HfBr₄, HfI₄, VCl₄, NbCl₄, TaCl₅, MoCl₅ or WCl₅.

11. Process according to one of the preceding claims, characterized in that the derivative of a transition metal is a titanium halide or a zirconium halide or a hafnium halide.

12. Process according to one of the preceding claims, characterized in that the derivative of a transition metal is ZrCl₄.

13. Process according to one of the preceding claims, characterized in that the molar ratio of the halogenated derivative to the surface hydroxyl groups of the support is between 0.5 and 30 and preferably ranges from 1 to 20.

14. Process according to one of the preceding claims, characterized in that the molar ratio of the amount of C to the amount of halogenated derivative ranges from 2 to 10 and preferably from 2 to 4.

15. Process according to one of the preceding claims, characterized in that the molar ratio of the amount of D to the amount of C ranges from 1 to 10 and preferably from 1 to 5.

16. Process according to one of the preceding claims, characterized in that the molar ratio of the amount of derivative of a transition metal to the amount of D ranges from 0.5 to 5 and preferably from 0.5 to 3.

17. Solid catalytic component capable of being obtained by the process of one of the preceding claims.

18. Process for the suspension or gas-phase polymerization or copolymerization of at least one olefin in the presence of the component of Claim 17.

19. Process according to Claim 18, characterized in that at least one olefin is ethylene.

20. Process according to Claim 18, characterized in that at least one olefin is propylene.
